# EUROPEAN PATENT APPLICATION

(11) **EP 4 670 509 A1**
(43) Date of publication of application: **31.12.2025**
(21) Application number: 24382702.9
(22) Date of filing: 28.06.2024
(51) Int. Cl.: A23J 1/00, A23J 3/14, A23J 3/22, A23L 25/00, A23L 29/206, A23L 31/00, A23L 33/105, A23L 33/17, A23L 33/195, C12N 1/14, C12R 1/69, C12R 1/67

(54) **FOOD INGREDIENT, METHOD OF OBTAINING THE SAME AND ITS USES**

(71) Applicant: Enzicas Bio SL, 15705 Santiago de Compostela A Coruña (ES)
(72) Inventor: GOMEZ HOMBRE, BRANDAN, 15705 Santiago de Compostela (ES); LAMA GONZALEZ, VICTOR, 15705 Santiago de Compostela (ES)
(74) Representative: Pons IP

(57) **Abstract**

The present invention relates to a method for obtaining a food ingredient through the fermentation of a chestnut substrate with Aspergillus fungi, more specifically A. sojae or A. oryzae, and additionally, this invention pertains to the said food ingredient and its uses in the production of food products such as meat or dairy products.

## Description

The present invention relates to a method for obtaining a food ingredient through the fermentation of a chestnut substrate with fungi. Additionally, this invention pertains to the said food ingredient and its uses in the production of food products. Therefore, the invention could be classified in the field of food and, more particularly, within the sector of food ingredients for meat and dairy products.

### State of the Art

The maturation of foods such as meats or dairy products is an ancient process that has regained significant interest today for the production of high-value foods.

Maturation and curing processes are normally carried out in high-added-value meats such as beef, veal, or sausages to obtain products with very attractive organoleptic characteristics, such as achieving high tenderness as a result of post-mortem maturation and the appearance of aromas before and especially during cooking. Additionally, these maturation processes are also carried out in dairy products to obtain, for example, cheeses with improved organoleptic characteristics for the consumer.

In the case of meat products, the maturation process consists of converting the animal's muscle tissue into meat; that is, the enzymes present in the meat act by breaking down proteins and muscle connective tissue to make it digestible and tender and to maintain an appropriate pH. The appropriate ultimate pH of the meat is vital to ensure the physicochemical and sensory properties of the meat, being closely related to the water retention capacity, color, and tenderness. The pH, being non-acidic (5.5-5.6), makes the meat a very suitable substrate for microbial multiplication. Until now, it was believed that the meat's own enzymes spontaneously and independently generated the flavors, palatability, and tenderness of the final product, considering the meat tissue or muscle and fat as a "sterile entity" free of microorganisms, and therefore it was not contemplated that this maturation process was generated by the contribution of microorganisms.

Thus, maturation processes mainly allow achieving sensory characteristics valued by consumers such as tenderness or the presence of aromas. However, one of the problems associated with food maturation processes would be the need to apply long periods of time to obtain the desired results. The temporal delay in maturation processes leads to increased consumption of energy resources, storage, and personnel, which increases the cost of manufactured products.

In the state of the art, certain strategies exist to reduce maturation times, such as the addition of enzymes like lipases or proteases during food processing (Fernandez M. et al. (2000). Trends in food science & technology 11(6), 201-209; Fox P. F. et al. (1996). Acceleration of cheese ripening. Antonie van Leeuwenhoek 70, 271-297).

On the other hand, the preservation of matured foods must also be considered to comply with food safety regulations. In this regard, in the food industry, components such as nitrates or nitrites are added in food manufacturing to prevent the growth of contaminant microorganisms. However, the use of nitrates and nitrites in food preservation carries certain disadvantages since exposure to these compounds can lead to toxic effects in individuals who consume them regularly, which has been associated, for example, with an increased risk of cancer (Chamandoost S. et al. (2016). Journal of Human Environment and Health Promotion 1(2), 80-86).

Therefore, there is a need in the state of the art to provide new strategies that allow a reduction in the maturation times of food products, improving their sensory, functional, and nutritional characteristics and also allowing their preservation while avoiding the use of toxic products such as nitrates or nitrites.

### Description of the Invention

The present inventors have developed a method for the elaboration of a food ingredient that comprises proteolytic activity, where such a food ingredient is suitable for use in the production of food products.

The method of the present inventors is a chemical-free method that only uses environmentally friendly and safe organic elements for consumption. More specifically, the method of the present invention involves the use of a chestnut substrate on which fungi of the genus Aspergillus are cultivated, leading to the production of proteases that enable the proteolysis of proteins in food products to which the resulting ingredient is added.

On the other hand, the ingredient obtained by the method of the present invention also promotes the preservation of the foods to which it is added, thus avoiding the use of chemical compounds that can be toxic, such as nitrates or nitrites. Therefore, the food ingredient of the present invention is presented as a healthier and socially accepted alternative to the chemical preservatives currently used in the food industry.

Additionally, the food ingredient of the present invention provides an improvement in the organoleptic properties such as aromas, flavor, texture, and appearance of the foods to which it is added. The Aspergillus fungi cultivated on the chestnut substrate generate components such as glutamate, capable of enhancing the flavors of the foods.

Thus, in a first aspect, the present invention refers to a method for obtaining a food ingredient, hereinafter referred to as the "method of obtaining the invention," where such method comprises the following stages:
a) Inoculate a chestnut substrate with fungi of the species Aspergillus sojae or Aspergillus oryzae;
b) Cultivate the fungi Aspergillus sojae or Aspergillus oryzae on the chestnut substrate after step a).

In the present invention, the term "food ingredient," "food additive," or "food additive" used interchangeably refers to a substance or composition that is generally not consumed as food itself but is suitable for addition to a food or in the food manufacturing process to enhance its maturation, nutritional value, preservation, and/or modify its organoleptic properties.

In the present invention, the term "inoculate" refers to contacting the chestnut substrate with Aspergillus fungi for their subsequent cultivation.

The method of obtaining the invention comprises only the use of natural-origin elements, where stage a) of such method involves inoculating a chestnut substrate with fungi of the species Aspergillus sojae or Aspergillus oryzae.

In the present invention, the term "chestnuts" refers to the fruit of a plant belonging to the family of fagaceae; more preferably, chestnut refers to the fruit of the plant belonging to the species Castanea sativa. In the method of the present invention, the fruit of the chestnut is used as a substrate to cultivate microorganisms, where the term "chestnut substrate" refers to the fruit of the plant Castanea sativa or a fragment of said fruit on which a microorganism is inoculated in such a way that it provides the support and nutrients necessary to allow the development and metabolic activity of said microorganism (in the present invention, Aspergillus microorganisms).

In a preferred embodiment of the method of obtaining the invention, the chestnut substrate is obtained after crushing chestnuts; more preferably, the chestnut substrate is obtained after crushing chestnuts to obtain fragments with a size smaller than 5mm. The crushing of chestnuts can be carried out using a methodology known to the expert in the field, for example, through the use of a hammer mill.

More preferably, the chestnut substrate of stage a) of the method of obtaining the invention corresponds to crushed chestnuts; more preferably crushed chestnuts where the size of the fragments is less than 5 mm; more preferably, the size of the fragments of the crushed chestnuts of the chestnut substrate is between 1.25 and 5 mm; even more preferably, the size of the fragments of the crushed chestnuts of the chestnut substrate is between 2.5 and 5 mm.

In the present invention, the term "fragment size" or "particle size" used interchangeably in reference to crushed chestnut substrate refers to the length of the largest tridimensional axis of the particle or chestnut fragment, preferably the particle size or fragment size is determined by sieving.

In another preferred embodiment of the method of obtaining the invention, the chestnut substrate of stage a) is obtained from peeled chestnuts (i.e., without pericarp).

Additionally, the chestnut substrate can be moistened to enhance the subsequent inoculation and cultivation of the fungi.

In another preferred embodiment of the method of obtaining the invention, the chestnut substrate is moistened with water; more preferably, the chestnut substrate is moistened to reach a moisture content of 50%.

In another preferred embodiment of the method of obtaining the invention, the chestnut substrate is moistened with water for at least 45 minutes in a chestnutwater ratio of 1:10.

Additionally, the chestnut substrate may be subjected to a treatment to eliminate contaminating microorganisms prior to stage a); preferably a heat treatment such as autoclaving.

In another preferred embodiment of the method of obtaining the invention, the chestnut substrate is subjected to an autoclaving procedure, preferably at a temperature between 110°C and 125°C for a period of between 10 and 50 minutes; more preferably at 118°C for 45 minutes.

In another preferred embodiment of the method of obtaining the invention, such method comprises the following stages:
a) Inoculate a chestnut substrate with fungi of the species Aspergillus sojae and Aspergillus oryzae;
b) Cultivate the fungi Aspergillus sojae and Aspergillus oryzae on the chestnut substrate after stage a).

The Aspergillus sojae and Aspergillus oryzae fungi in the present invention refer to them in their viable form so that they can divide
and carry out their metabolic activities under appropriate conditions. Preferably, in the present invention, the fungi Aspergillus sojae and Aspergillus oryzae refer to their viable cell form or their viable spore form.

Thus, in another preferred embodiment of the method of obtaining the invention, the fungi of stage a) are inoculated in the form of a cell or spore. Preferably, the fungi of stage a) are inoculated in the chestnut substrate in the form of an aqueous solution, where the amount of fungus concerning the volume of such solution is between 10mg/ml and 25mg/ml, and where such solution is added in an amount of between 0.5 and 2 ml per each 100g of chestnut substrate. More preferably, the A. oryzae fungi of stage a) are inoculated in the chestnut substrate in the form of an aqueous solution, where the amount of fungus concerning the volume of such solution is 15mg/ml, and where such solution is added in an amount of 1 ml per each 100g of chestnut substrate; the A. sojae fungi of stage a) are inoculated in the chestnut substrate in the form of an aqueous solution, where the amount of fungus concerning the volume of such solution is 20mg/ml, and where such solution is added in an amount of 1 ml per each 100g of chestnut substrate.

After stage a) of the method of obtaining the invention, the chestnut substrate is inoculated with the Aspergillus fungi, which are subsequently subjected to a stage b) that involves cultivating the Aspergillus fungi on the chestnut substrate.

In the present invention, the term "cultivate" refers to a method by which Aspergillus fungi reproduce and carry out their metabolic activity under appropriate conditions on a substrate that provides the necessary nutrients for this purpose. In the case of the present invention, the chestnut substrate provides the necessary nutrients for the development of the fungi, allowing fermentation and the release of active molecules such as proteases, amylases, and/or glutamate.

During stage b) of cultivation of the method of obtaining the invention, fermentation occurs, more preferably fermentation of the chestnut substrate, resulting in the production of proteases and other molecules like glutamate or α-amylase.

In another preferred embodiment of the method of obtaining the invention, stage b) is carried out at a temperature between 25°C and 35°C, preferably 27.5°C or 31°C. Preferably, stage b) of the method of obtaining the invention is carried out in a humid environment of at least 60%, more preferably 80% humidity.

In another preferred embodiment of the method of obtaining the invention, stage b) is carried out for a period of at least 24 hours, more preferably between 24 hours and 48 hours, more preferably 48 hours.

After step b) of the method of obtaining the invention, the food ingredient is obtained.

Thus, the food ingredient obtained from the method of obtaining the invention preferably comprises the fermented chestnut substrate along with Aspergillus sojae and/or Aspergillus oryzae fungi.

Optionally, the method of obtaining the invention comprises a filtration stage to eliminate unwanted solid residues.

The resulting food ingredient from the method of obtaining the present invention exhibits high proteolytic activity, which is interesting in the manufacturing of foods, preferably foods that require a maturation process.

Therefore, in another aspect, the present invention refers to a food ingredient obtained from the method of obtaining the invention, hereinafter referred to as the "food ingredient of the invention."

The food ingredient of the invention can also be defined as "food ingredient obtained from the method of obtaining the invention" or "food ingredient obtained by the method of obtaining the invention."

In a particular embodiment, the food ingredient of the invention is formulated as a solid, powder, or liquid.

In another particular embodiment, the food ingredient of the invention comprises a fermented chestnut substrate, preferably where such fermented substrate includes enzymes such as proteases.

In another particular embodiment, the food ingredient of the invention comprises proteases.

Proteases are enzymes capable of breaking the peptide bonds of proteins, which is highly relevant in food maturation processes. Thus, due to its proteolytic activity, the food ingredient allows reducing the maturation times of foods such as, for example, meats (for instance, sausages) or cheeses.

In another particular embodiment, the food ingredient of the invention has a proteolytic activity between 2,500 U/kg and 5,000 U/kg (where "kg" refers to kilograms of the food ingredient). The proteolytic activity can be determined using methodologies known to the expert in the field, such as colorimetric assays. Preferably, the proteolytic activity is determined using a colorimetric assay with AZCL-casein, more preferably as conducted in the experiments of the present invention.

In addition to proteases, other compounds capable of improving the organoleptic characteristics of foods are produced during the cultivation of fungi on the chestnut substrate; such compounds include glutamate.

In another particular embodiment, the food ingredient of the invention also comprises glutamate.

In another particular embodiment, the food ingredient of the invention also comprises α-amylase. The enzyme comprising α-amylase performs a random hydrolysis of the α-1,4 bonds in the linear chain of starch macromolecules.

In addition to reducing food maturation times and improving their organoleptic properties, the said ingredient allows preserving foods without the need to use compounds such as nitrates or nitrites.

Therefore, in another aspect, the present invention refers to the use of the food ingredient of the invention in the manufacturing and/or preservation of a food, hereinafter referred to as the "use of the invention."

In the present invention, the term "food" or "food product" used interchangeably refers to any composition that includes nutrients such as proteins, fats, and/or carbohydrates, which is intended for human consumption or the consumption of a non-human animal. Preferably, the food of the use of the invention refers to a processed food, which has been intervened by humans for its manufacturing, such as meat products or dairy products; examples of meat products include, without limitation, sausages such as sausages, salamis, or cured meats; examples of dairy products include, without limitation, cheeses.

In a preferred embodiment of the use of the invention, the food is a matured food, where the term matured food refers to a food subjected to a maturation process, such as matured meats or cheeses.

In another preferred embodiment of the use of the invention, the food is a meat or dairy product; more preferably, where the meat product is a sausage or where the dairy product is cheese.

In the present invention, the term "preservation of a food" or "preserving a food" used interchangeably refers to the process by which a food preserves its organoleptic characteristics and the characteristics that make it suitable for consumption (for example, control of the growth of contaminant microorganisms).

In another aspect, the present invention refers to a method for the manufacturing of a matured food, hereinafter referred to as the "maturation method of the invention," which comprises:
a) contacting a food with the food ingredient of the invention, and
b) subjecting the food to a maturation process after stage a).

In a preferred embodiment of the maturation method of the invention, the food is a meat or dairy product; more preferably, where the meat product is a sausage or where the dairy product is cheese.

Preferably, stage a) of the maturation method of the invention involves applying the ingredient of the invention to meat and dairy products, for example, at the moment prior to the forming of the cheeses and the mixing of the sausage filling.

The result is a controlled fermentation process that improves the texture, flavor, and aroma of meat and dairy products, reducing maturation times. The food ingredient causes a proteolytic process during maturation that degrades proteins, generating in both cases peptides, amino acids, and glutamic acids (which provide flavors and aromas).

In the case of meat maturation, it causes an accelerated degradation of protein bonds and muscle fibers, which also increases the tenderness of the meats.

In the case of dairy products, it generates an accelerated unfolding of casein into amino acids and peptides, providing an increase in the flavors and aromas typical of matured cheeses.

In the present invention, the term "maturation process," which is referenced in stage b) of the maturation method of the invention, has the meaning commonly known to the expert in the field in the food context; more preferably, during the maturation process, the foods are preserved for a period of time and under conditions that allow protein degradation reactions, carbohydrates, fats, and/or production of compounds that modify the organoleptic characteristics of food.

In another aspect, the present invention refers to a food, hereinafter referred to as the food of the invention, which comprises the food ingredient of the invention.

In a particular embodiment of the food of the invention, such food is a matured food.

In another particular embodiment of the food of the invention, the food is a meat or dairy product; more preferably, where the meat product is a sausage or where the dairy product is cheese.

### Description of the Figures

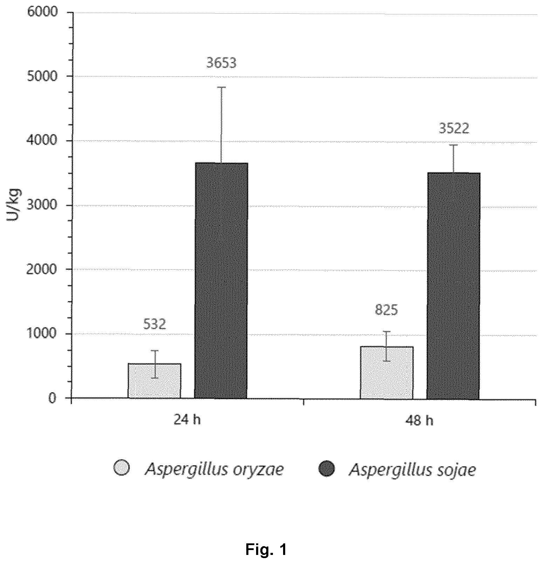

Fig. 1. Proteolytic enzymatic activity of chestnut substrates fermented with Aspergillus oryzae and Aspergillus sojae. Enzymatic activity quantified by absorbance using AZCL-casein as a substrate. Enzymatic activity represented as U/kg, corresponding to the units of proteolytic activity per kilogram of fermented chestnut substrate.

### Examples

The invention will be illustrated below through experiments conducted by the inventors.

Example 1. Obtaining the food ingredient through the fermentation of a chestnut substrate with fungi.

The general scheme for obtaining a food ingredient through the fermentation of chestnuts with fungi of the genus Aspergullis comprises the following stages:
- Crushing the chestnuts (fruit of the tree Castanea sativa).
- Sieving.
- Moistening.
- Heat treatment.
- Fermentation.

### 1.1 Crushing the Chestnuts

Starting with 116 kg of chestnuts from Castanea sativa, which were peeled to remove the pericarp and mechanically crushed with a mill, more specifically a hammer mill (Pulvererisette 16).

### 1.2 Sieving

After crushing the chestnuts, they were sieved to separate the fragments according to their sizes. Sieves of 5 mm, 2.5 mm, and 1.25 sieves were used. Table 1 indicates the quantity of chestnut fragments according to their size.

**Table 1. Quantity of Chestnut Fragments After Crushing and Sieving.**

| Fraction | Size (mm) | Mass (kg) |
|---|---|---|
| 1 | >5 | 0.36 |
| 2 | 2.5-5.0 | 5.15 |
| 3 | 1.25-2.5 | 3.5 |
| 4 | <1.25 | 2.61 |
| | TOTAL | 11.61 KG |

Once sieving was performed, the fractions from Table 1 were placed in sealed vacuum plastic bags and stored at -20°C until their use.

### 1.3 Moistening

Fraction 2 from Table 1 (chestnut fragments with a size between 2.5 and 5.0 mm) underwent a moistening stage to reach a 50% moisture content. The moistening stage was carried out for 45 to 50 minutes by placing the chestnut fragments in water (chestnut:water ratio = 1:10).

### 1.4 Heat Treatment

After the moistening stage, a heat treatment was carried out to ensure the sterilization of fraction 2 of chestnuts from Table 1. The heat treatment was carried out in an autoclave using the following conditions: temperature 118°C for 45 minutes.

After the heat treatment, the quantity of microorganisms present in the sample of chestnuts was determined by culturing, which is included in Table 2

**Table 2. Quantity of Microorganisms in Chestnut Fragments After Applying Heat Treatment.**

| Microorganisms (colony-forming units per gram of chestnut sample (CFU/g)) | Control | Heat Treatment |
|---|---|---|
| Aerobic mesophilic spores | 140E+3 | <10 |
| Anaerobic mesophilic spores | 720E+02 | <10 |
| Total aerobic mesophiles | 300E+06 | <10 |
| Acidolactic mesophiles | 300E+06 | <10 |
| Bacillus cereus | <50 | <50 |
| Molds | 400E+03 | <10 |
| Yeasts | 100E+03 | <10 |

| | | |
|---|---|---|
| *Control: sample of chestnuts from fraction 2 of Table 1 without heat treatment. | | |

### 1.5 Fermentation

Finally, the fraction of chestnuts between 2.5 mm and 5 mm with 50% moisture and sterilized was used as a substrate and was inoculated with 10 ml of a fungus solution. Two inoculations were carried out on independent samples:
1. Inoculation with Aspergillus oryzae in a solution of 15mg/ml.
2. Inoculation with Aspergillus sojae in a solution of 20mg/ml.

The fungus solutions were inoculated in a proportion of 1ml per each 100g of chestnut substrate. After inoculation, incubation was carried out in closed Petri dishes to allow the fermentation of the substrate by the fungi. The fermentation conditions were as follows:
Temperature: 31°C
Humidity: 80%
Time: 24-48 hours
At 24 hours of fermentation, the growth of both molds on the chestnuts was noticeable.

At 48 hours, proliferation was greater in the molds, acquiring their characteristic colors. Aspergillus oryzae -> white, Aspergillus sojae -> Green. No presence of contaminants (aerobic mesophiles or yeasts) was detected.

### Example 2. Proteolytic Activity of the Food Ingredient.

Once fermentation was carried out in step 1.4 of Example 1, the enzymatic activity (proteolytic) of both the Aspergillus oryzae and Aspergillus sojae ferment was determined.

To measure the proteolytic activity, the Protazyme Ak tablets kit (Food/industries/megazyme) was used. This kit includes tablets that contain AZCL-casein, which dissolve and, when in contact with proteases, the mixture turns blue. The intensity of the blue color is recorded as absorbance by spectrophotometry, thus obtaining a quantitative data of the proteolytic activity. Calibration curves were obtained using commercial proteases from A.oryzae and A.sojae (obtained from Sigma Aldrich).

The data of enzymatic activity (proteolytic) obtained in the chestnut substrates fermented with A.oryzae or A.sojae are shown in Figure 1, represented as U/kg, which corresponds to the units of proteolytic activity per kilogram of fermented chestnut substrate. As can be seen in Figure 1, the samples fermented with A. sojae showed a proteolytic activity average 69 times and 43 times higher than A. oryzae at 24 and 48 hours of fermentation.

## Claims

1. A method for obtaining a food ingredient where such method comprises the following stages:
a) Inoculate a chestnut substrate with fungi of the species Aspergillus sojae or Aspergillus oryzae;
b) Cultivate the fungi Aspergillus sojae or Aspergillus oryzae on the chestnut substrate after stage a).

2. Method according to claim 1 where such method comprises the following stages:
a) Inoculate a chestnut substrate with fungi of the species Aspergillus sojae and Aspergillus oryzae;
b) Cultivate the fungi Aspergillus sojae and Aspergillus oryzae on the chestnut substrate after stage a).

3. Method according to claim 1 or 2 where the chestnut substrate consists of crushed chestnuts.

4. Method according to any of the claims 1 to 3 in which stage b) produces fermentation.

5. Method according to any of the claims 1 to 4 in which stage b) is carried out at a temperature between 25°C and 35°C.

6. Method according to any of the claims 1 to 5 in which stage b) is carried out for a period of time between 24 hours and 48 hours.

7. A food ingredient obtained from the method according to any of the claims 1 to 6.

8. Ingredient according to claim 7 **characterized by** comprising proteases.

9. Ingredient according to claim 7 or 8 **characterized by** comprising glutamate.

10. Use of the food ingredient according to any of the claims 7 to 9 in the manufacturing and/or preservation of a food.

11. Use of the food ingredient according to claim 10 where the food is a matured food.

12. Use of the food ingredient according to claim 10 or 11 where the food is a meat or dairy product.

13. A method for the manufacturing of a matured food comprising:
a) contact a food with the food ingredient according to any of the claims 7 to 9, and
b) subject the food to a maturation process after stage a).

14. Method according to claim 13 where the food is a meat or dairy product.

15. A food comprising the food ingredient according to any of the claims 7 to 9.
